# EUROPÄISCHE PATENTSCHRIFT

(11) **EP 3 414 465 B1**
(45) Veröffentlichungstag und Bekanntmachung des Hinweises auf die Patenterteilung: **25.12.2019**
(21) Anmeldenummer: 17702764.6
(22) Anmeldetag: 18.01.2017
(51) Int. Cl.: F16D 55/225, F16D 66/02

(54) **VERFAHREN ZUR LÜFTSPIELERKENNUNG BEI EINER BREMSE EINES KRAFTFAHRZEUGS, INSBESONDERE NUTZKRAFTFAHRZEUGS, CONTROLLER SOWIE BREMSE MIT SELBIGEM**
METHOD FOR DETECTING THE CLEARANCE OF A BRAKE OF A MOTOR VEHICLE, IN PARTICULAR A UTILITY MOTOR VEHICLE, CONTROLLER, AND BRAKE HAVING SAME
PROCÉDÉ D'IDENTIFICATION DE JEU À L'OUVERTURE POUR UN FREIN DE VÉHICULE À MOTEUR, EN PARTICULIER DE VÉHICULE UTILITAIRE, CONTRÔLEUR ET FREIN DOTÉ D'UN TEL SYSTÈME.

(30) Priorität: 11.02.2016 DE 102016001577
(43) Veröffentlichungstag der Anmeldung: 19.12.2018
(73) Patentinhaber: WABCO Europe BVBA, 1170 Brussels (BE)
(72) Erfinder: KELLER, Marcus, 69469 Weinheim (DE); SEIP, Mirko, 69434 Brombach (DE)
(74) Vertreter: Copi, Joachim
(86) Internationale Anmeldenummer: PCT/EP2017/000053
(87) Internationale Veröffentlichungsnummer: WO 2017/137140

(56) Entgegenhaltungen:
- EP-A1- 2 520 817
- EP-A2- 0 460 376
- DE-A1-102012 102 579

## Beschreibung

Die vorliegende Erfindung betrifft ein Verfahren zur Lüftspielerkennung bei einer Bremse eines Kraftfahrzeugs, insbesondere eines Nutzkraftfahrzeugs. Die Erfindung betrifft ferner einen Controller zur Lüftspielerkennung bei einer solchen Bremse, sowie eine solche Bremse.

Verfahren zur Lüftspielerkennung sind in der Kraftfahrzeug-, insbesondere Nutzkraftfahrzeugbranche allgemein bekannt. So offenbart beispielsweise EP 2 520 817 A1 ein solches Verfahren. Ziel ist allgemein, mittels der Lüftspielerkennung festzustellen, wie weit der in der Bremse eingesetzte Bremsbelag verschlissen ist, bzw. ob die Bremse wie vorgesehen arbeitet.

Eine Herausforderung besteht darin, aus den im Kraftfahrzeug verfügbaren Sensoren mit ausreichender Zuverlässigkeit und Genauigkeit Daten zu extrahieren, die zur Lüftspielerkennung verwendet werden können. EP 2 520 817 A1 schlägt hierzu vor, den Verschleißsensor der Bremse zu nutzen. Insbesondere wird vorgeschlagen, mittels des Verschleißsensors die von einer Zustelleinheit zurückgelegte Wegstrecke zu einem ersten Zeitpunkt bei nicht betätigter Bremse zu messen, und zu einem zweiten Zeitpunkt bei betätigter Bremse erneut zu messen. Aus der Differenz der beiden gemessenen Wegstrecken wird sodann unmittelbar ein Wert ermittelt, der das Lüftspiel repräsentieren soll.

Hier besteht allerdings der signifikante Nachteil, dass der ermittelte Wert nicht mit ausreichend hoher Genauigkeit das tatsächliche Lüftspiel wiedergibt. Vielmehr wird der dort ermittelte Wert durch Störeinflüsse verfälscht.

Beispielsweise werden allein durch die elastische Sattelaufweitung der Bremsanlage Wegstrecken der Zustelleinheit von bis zu 2 mm verursacht, so dass eine korrekte Bestimmung des Lüftspiels, welches in der Praxis meist unterhalb 1 mm liegt, ohne Berücksichtigung weiterer Hilfsgrößen, die die Überwindung des Lüftspiels zu definieren helfen, unmöglich ist.

Vor diesem Hintergrund lag der vorliegenden Erfindung die Aufgabe zugrunde, eine Möglichkeit zur Lüftspielerkennung anzugeben, welche bei möglichst minimalem apparativen Aufwand eine zuverlässige Erkennung des Lüftspiels mit möglichst hoher Genauigkeit ermöglicht.

Die Erfindung löst die ihr zugrunde liegende Aufgabe bei einem Verfahren der eingangs bezeichneten Art mit den Schritten:
- Auslesen von Messsignalen eines an der Bremse angeordneten Verschleißsensors,
- Ermitteln eines Ausgangssignalwertes, der repräsentativ für den unbetätigten Zustand der Bremse ist, aus den Messsignalen,
- Ermitteln eines Ereignissignalwertes, der repräsentativ für den Bremszustand der Bremse ist, aus den Messsignalen, und
- Ermitteln des Lüftspiels aus der Differenz zwischen dem Ereignissignalwert und dem Ausgangssignalwert, wobei
- die Messsignale des Verschleißsensors auf das Vorliegen einer charakteristischen Signalschwingung untersucht werden, die infolge des Inkontaktbringens des Bremsbelags mit seinem zu bremsenden Gegenpart entsteht.

Die Erfindung betrifft sowohl Scheibenbremsen als auch Trommelbremsen, wobei bei einer Scheibenbremse der zum Bremsbelag korrespondierende Gegenpart die Bremsscheibe ist, und bei einer Trommelbremse die Bremstrommel.

Der Verschleißsensor misst in allgemein bekannter Art beispielsweise den Hubweg der Zustelleinheit, eines Druckstempels oder eine Winkelbewegung eines entsprechend angelenkten Bauteils im Kraftstrang der Bremsanlage. Erfindungsgemäß wird unter dem Ausgangssignalwert das Messsignalplateau des Verschleißsensors bei nicht betätigter Bremse verstanden. Dieser Wert verschiebt sich im Laufe der Zeit durch voranschreitenden Verschleiß der Bremsbeläge. Unter dem Ereignissignalwert wird erfindungsgemäß derjenige Signalwert verstanden, bei dem mit Sicherheit davon ausgegangen werden kann, dass der Bremsbelag und sein Gegenpart soweit miteinander in Kontakt gebracht worden sind, dass kein weiterer Leerhub stattfinden wird.

Die Erfindung macht sich die Erkenntnis zu Nutze, dass der Verschleißsensor bereits ein hochsensibles Messinstrument- darstellt, welches über die reine Messung einer Betätigungsstrecke hinaus anhand des zeitlichen Signalverlaufs analysiert werden kann. Eine Veränderung der mechanischen Struktur, wie sie insbesondere durch das in Kontaktbringen zwischen Bremsbelag und Gegenpart stattfindet, wirkt sich unmittelbar auf den Signalverlauf des Ausgangssignals des Verschleißsensors aus. Es ist erfindungsgemäß erkannt worden, dass immer dann, wenn Bremsbelag und Gegenpart miteinander in Kontakt gebracht worden sind, und der Leerhub der Bremsanlage ausgeschöpft worden ist, eine charakteristische Schwingung im Signalverlauf auftritt. Hier setzt die Erfindung an und identifiziert im Signalverlauf jene Signalschwingung. Dadurch, dass der Fokus erfindungsgemäß auf die Analyse des Messsignals des Verschleißsensors gerichtet wird, können Störgrößen wie die elastische Sattelaufweitung als Störgrößen ausgeschlossen werden.

Die Erfindung wird vorteilhaft weitergebildet, indem die charakteristische Schwingung durch ein lokales Signalmaximum und zeitlich dazu benachbartes lokales Signalminimum gebildet wird, wobei als Ereignissignalwert der Signalwert des Signalminimums gesetzt wird. Es ist zwar so, dass der theoretische Leerhub bzw. das theoretische Lüftspiel bereits geringfügig vor Auftreten der charakteristischen Schwingung durchschritten wird. Dies zeigt sich im zeitlichen Signalverlauf des Verschleißsensors in einer leichten Abschwächung des Signalanstiegs. Dieser Bereich ist allerdings nicht mit befriedigender Wiederholgenauigkeit im Signalverlauf verortbar. Da die charakteristische, vorstehend beschriebene Schwingung aber stets bereits kurz nach dem ersten Abflachen des Signalwertanstiegs auftritt, kann durch Identifikation der charakteristischen Schwingung und durch das willkürliche Festsetzen des Signalminimums als Ereignissignalwert mit hoher Wiederholgenauigkeit ein Wert für das Lüftspiel ermittelt werden, der sehr nah am tatsächlichen (theoretischen) Lüftspiel liegt.

Wird beispielsweise eine Scheibenbremse mit Druckstempel betrachtet, bei der der Verschleißsensor direkt den zurückgelegten Weg des Druckstempels misst, wird sich gegebenenfalls eine leichte Abflachung im Signalverlauf einstellen, sobald der Druchstempel den Bremsbelag kontaktiert, und eine weitere Abflachung, sobald der vom Druckstempel bewegte Bremsbelag seinen ersten Kontakt mit der Bremsscheibe hat. Der Druckpunkt der Bremse, bei dem der Bremsbelag "zu greifen" beginnt, setzt aber unmittelbar hiernach ein, und es ist dieser Punkt, der in Form der charakteristischen Schwingung im Signalverlauf des Verschleißsensors sichtbar wird.

In einer bevorzugten Ausführungsform des Verfahrens wird der Ausgangssignalwert ermittelt, indem die ausgelesenen Messsignale über einen vorbestimmten Zeitraum gemittelt werden, und der Mittelwert zwischengespeichert wird. Die Mittelwertbildung dient einerseits der Signalglättung, und kann andererseits genutzt werden, um Störsignale aus dem Signalverlauf herauszufiltern. Bei nichtbetätigter Bremse ist aufgrund unterschiedlichster Betriebsbedingungen der vom Verschleißsensor übermittelte Signalwert nie exakt konstant, sondern bewegt sich in einem bestimmten Toleranzband. Wird beispielsweise die vorbestimmte Zeit, in dem die Messsignale gemittelt werden, auf 0,05 sec. gesetzt, und tastet der Verschleißsensor mit einer Frequenz von 100 Hz ab, werden jeweils Mittelwerte über fünf aufeinanderfolgende Einzelmessungen gebildet.

Je nach gewünschter Glättung können die Frequenz und der zu ermittelnde Zeitraum angepasst werden.

In einer weiteren bevorzugten Ausführungsform des Verfahrens wird der Schritt des Ermittelns des Ereignissignalwerts durchgeführt, sobald das ausgelesene Messsignal den Ausgangssignalwert um einen vorbestimmten Triggerwert überschreitet. Hierdurch soll verhindert werden, dass ein Schwingungsereignis im Signalverlauf fälschlicherweise als Durchschreiten des Lüftspiels identifiziert wird, welches lediglich auf äußere Störungen zurückzuführen ist. Der vorbestimmte Triggerwert wird vorzugsweise in einem Signalwertbereich liegen, der umgerechnet auf den Betätigungsweg des vom Verschleißsensor gemessenen Bauteils in einem Bereich von 20% - 50% des konstruktiv bedingten Lüftspiels liegt.

In einer bevorzugten Ausgestaltung des erfindungsgemäßen Verfahrens umfasst das Ermitteln des Ereignissignalwerts das Erfassen der Messsignale als Funktion der Zeit, das Bilden einer ersten zeitlichen Ableitung des Messsignals, und das Bilden einer zweiten zeitlichen Ableitung des Messsignals. Aus diesen drei Funktionen kann im Anschluss mit geringem Rechenaufwand das Signalmaxium, und vor allem das Signalminimum, ermittelt werden. Das Signalminimum wird hierbei als derjenige Signalwert bestimmt, bei dem die erste zeitliche Ableitung des Messsignals gleich null ist, und die zweite zeitliche Ableitung des Messsignals größer null ist. Analog wird als Signalmaximum derjenige Signalwert bestimmt, bei dem die erste Ableitung des Messsignals gleich null und die zweite Ableitung des Messsignals kleiner null ist. Prinzipiell könnte als Ereignissignalwert auch der Signalwert gesetzt werden, der am Signalmaximum anliegt. Allerdings wird beim Durchschreiten des Signalmaximums zumindest eines der Bauteile bereits geringfügig elastisch verformt sein. Das Signalminimum ist deshalb näher am tatsächlichen theoretischen Lüftspiel zu verorten.

In einer weiteren bevorzugten Ausgestaltung erfolgt der Schritt des Ermittelns des Ausgangssignalwertes, sobald eine Bremsung des Kraftfahrzeugs beendet ist. Insbesondere erfolgt der Schritt, sobald der ausgelesene Messsignalwert den Triggerwert unterschreitet. Die Orientierung am Triggerwert wird als verarbeitungstechnisch einfache Möglichkeit angesehen. Der vor dem Bremsvorgang ermittelte und zwischengespeicherte Ausgangssignalwert wird nach Vollendung der Bremsung in der Regel nicht exakt wieder erreicht, weil durch die Bremsung am Bremsbelag Verschleiß auftritt.

Das erfindungsgemäße Verfahren wird dadurch vorteilhaft weitergebildet, dass es die Schritte umfasst:
- Bereitstellen eines Grenzwertes für das maximal zulässige Lüftspiel der Bremse,
- Vergleichen des ermittelten Lüftspiels mit dem Grenzwert, und
- Bereitstellen eines Warnsignals, falls das Lüftspiel den Grenzwert überschreitet.

Das Warnsignal kann vorzugsweise in Form eines charakteristischen Datensignals mit einem vorbestimmten Code, als akustisches oder optisches Warnsignal oder als Kombination mehrerer oder sämtlicher Signalformen bereitgestellt werden.

Das eingangs beschriebene Verfahren wird in einer bevorzugten Ausgestaltung zu einem Verfahren zum automatischen Nachstellen des Lüftspiels einer Bremse eines Kraftfahrzeugs, insbesondere eines Nutzkraftfahrzeugs weitergebildet, indem das Verfahren zusätzlich zu den Schritten der vorstehend beschriebenen bevorzugten Ausführungsformen weiter umfasst:
- Bereitstellen eines Sollwertes für das Lüftspiel der Bremse,
- Vergleichen des ermittelten Lüftspiels mit dem Sollwert, und
- Ermitteln eines Korrekturwertes als Differenz zwischen dem ermittelten Lüftspiel und dem Sollwert.

Weiter vorzugsweise umfasst das Verfahren zum automatischen Nachstellen:
- Bereitstellen des Korrekturwertes mittels einer Datenschnittstelle an eine, vorzugsweise elektrische, Nachstelleinheit der Bremse, und
- Nachstellen des Lüftspiels der Bremse um den bereitgestellten Korrekturwert.

Das Bereitstellen des Korrekturwertes erfolgt vorzugsweise, sobald die Differenz eine vorbestimmte Schwelle überschreitet, und/oder sobald der ermittelte Korrekturwert innerhalb eines vorbestimmten Toleranzbandes ein- oder mehrmals in sukzessiven Messungen bestätigt wird. Die Vorschrift, einen Korrekturwert nicht nur einmalig bestimmen zu können, sondern diesen mehrmals wiederholt ermitteln zu müssen, stellt sicher, dass an der Datenschnittstelle keine unsinnigen, "false positive" Korrekturwerte ausgegeben werden, sondern erst dann ein Korrekturwert bereitgestellt wird, wenn tatsächlich ein Trend eines veränderten Lüftspiels festgestellt und bestätigt wurde. Insbesondere in denjenigen Ausführungsformen, in denen eine manuelle Nachstellung des Lüftspiels bzw. eine mechanische Nachstellung des Lüftspiels erfolgen soll, wird es bevorzugt, wenn die Anzahl der notwendigen Korrektureingriffe auf ein sinnvolles Maß reduziert wird, so dass erst dann ein Korrekturbedarf in Form des Korrekturwerts gemeldet wird, wenn dieser auch nennenswert ist.

Soweit im vorstehenden und nachfolgenden Text von Messsignalen gesprochen wird, so werden hierunter Spannungs- oder Stromsignale verstanden, je nach ausgewähltem Verschleißsensor. Vorzugsweise weist der Verschleißsensor einen Weg- und/oder Winkelmessaufnehmer auf. Weiter vorzugsweise verhalten sich die Messsignale des Verschleißsensors linear proportional zu der erfassten Weg- bzw. Winkelstrecke.

Die Erfindung löst die ihr zugrunde liegende Aufgabe ferner, indem sie einen Controller zur Lüftspielerkennung bei einer Bremse eines Kraftfahrzeugs, insbesondere eines Nutzkraftfahrzeugs angibt, mit einem Prozessor, einem Datenspeicher und einer Datenschnittstelle, wobei in dem Datenspeicher ein Computerprogramm zur Durchführung des Verfahrens nach einer der vorstehend beschriebenen bevorzugten Ausführungsformen hinterlegt ist, und wobei der Prozessor dazu eingerichtet ist, einen, mehrere oder sämtliche der Verfahrensschritte dieses Verfahrens auszuführen. Der Controller bietet eine Stand-Alone-Lösung, um bei Kraftfahrzeugen mit Verschleißsensor eine Lüftspielerkennung nachzurüsten. Vorzugsweise ist der Controller dazu eingerichtet, zumindest eines der Folgenden an der Datenschnittstelle bereitzustellen:
- Für das Lüftspiel der Bremse repräsentative Signalwerte,
- ein Warnsignal bei Überschreiten eines vorbestimmten Grenzwerts des Lüftspiels, oder
- ermittelte Korrekturwerte zur Nachstellung des Lüftspiels.

Weiter vorzugsweise ist die Datenschnittstelle des Controllers zur direkten Kommunikation mit einer Nachstelleinheit, vorzugsweise einer elektrischen Nachstelleinheit, eingerichtet, oder zur Kommunikation mit einem Bus-System des Kraftfahrzeugs. Insbesondere mittels Kommunikation mit dem Bus-System des Kraftfahrzeugs kann der das Lüftspiel betreffende Signal- bzw. Kennwert einer geeigneten Fahrzeugelektronik zu Diagnosezwecken zur Verfügung gestellt werden. Über das Bus-System kann auch eine Erkennung von Fehlfunktionen der Bremse oder des Verschleißsensors erfolgen.

Die Erfindung löst die ihr zugrunde liegende Aufgabe ferner bei einer Fahrzeugbremse der eingangs genannten Art mit einem Verschleißsensor, indem diese einen Controller zur Lüftspielerkennung der Bremse aufweist, wobei der Verschleißsensor signalleitend mit dem Controller verbunden ist, und indem der Controller nach einer der vorstehend beschriebenen bevorzugten Ausführungsformen ausgebildet ist.

Die erfindungsgemäßen Vorteile des eingangs beschriebenen Verfahrens gelten in gleicher Weise für den Controller und die Fahrzeugbremse, und umgekehrt. Bevorzugte Ausführungsformen des erfindungsgemäßen Verfahrens sind zugleich bevorzugte Ausführungsformen des Computerprogramms, welches im Datenspeicher des Controllers hinterlegt ist.

Ausführungsbeispiele der Erfindung werden nun nachfolgend anhand der Zeichnungen beschrieben. Diese sollen die Ausführungsbeispiele nicht notwendigerweise maßstäblich darstellen. Vielmehr sind die Zeichnung, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweisen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei in der Beschreibung, den Zeichnungen und/oder den Ansprüchen offenbarten Merkmalen. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu den in den Ansprüchen beanspruchten Gegenständen. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen, sowie anhand der folgenden Figuren. Im Einzelnen zeigen:
Fig. 1 eine schematische Darstellung einer erfindungsgemäßen Fahrzeugbremse mit einem erfindungsgemäßen Controller,
Fig. 2 eine schematische Darstellung des erfindungsgemäßen Verfahrens, und
Fig. 3 einen Signalverlauf, der im erfindungsgemäßen Verfahren ausgewertet wird.

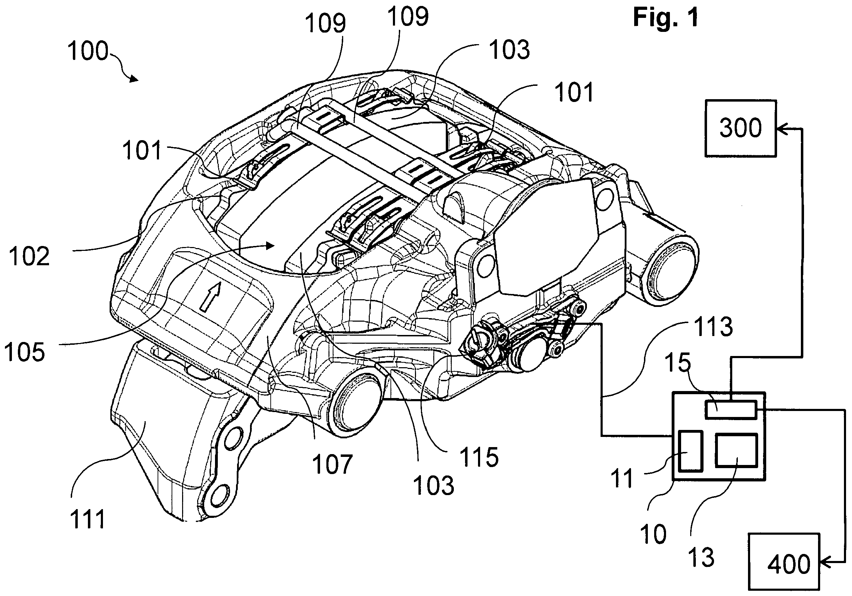

Gemäß Fig. 1 weist die erfindungsgemäße Bremse 100, welche in diesem Ausführungsbeispiel als Scheibenbremse ausgeführt ist, und welche für die Verwendung in einem Nutzkraftfahrzeug ausgebildet ist, eine Bremsscheibe 105 (angedeutet dargestellt) und zwei auf gegenüberliegenden Seiten der Bremsscheibe 105 angeordnete Bremsbeläge 103 auf, wobei die Bremsscheibe 105 und die Bremsbeläge 103 relativ zueinander bewegbar sind. Zumindest ein Bremsbelag 103 wird von einem Belagträger gehalten.

Die Scheibenbremse umfasst ferner einen Bremssattel 107, welcher axial auf Führungsbolzen eines Bremsenträgers 111 gleitet. Die Bremsbeläge 103 werden im Bremsenträger 111 axial verschiebbar geführt und abgestützt. Die Halterung der Bremsbeläge 103 erfolgt durch einen Niederhaltebügel 109 und durch Niederhaltefedern 101.

In dem Bremssattel 107 ist ein Verschleißsensor 115 angeordnet, der den Betätigungsweg eines Druckstempels (nicht gezeigt) misst. Der Verschleißsensor 115 ist mittels einer signalleitenden Verbindung 113, die wahlweise kabellos oder kabelgebunden ausgebildet sein kann, mit einem Controller 10 verbunden.

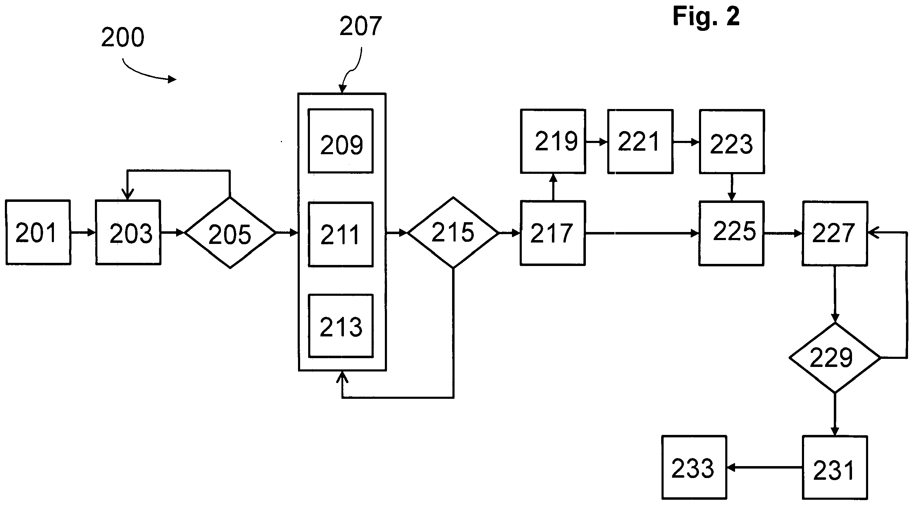

Der Controller 10 weist einen Prozessor 11 auf, sowie einen Datenspeicher 13 und eine Datenschnittstelle 15. Der Controller ist dazu eingerichtet, mittels eines auf dem Datenspeicher 13 hinterlegten Computerprogramms ein Verfahren 200 auszuführen (Fig. 2). Die mit dem Verfahren 200 ermittelten Signalwerte, Lüftspielwerte, Korrekturwerte und/oder Warnsignale gibt der Controller 10 über die Datenschnittstelle 15 aus, beispielsweise an eine elektronische Nachstelleinheit 300 oder an ein Bus-System 400 des Kraftfahrzeugs.

Fig. 2 zeigt schematisch einen Ablauf des erfindungsgemäßen Verfahrens in einem bevorzugten Ausführungsbeispiel. Als angenommenen Verfahrensbeginn werden in Schritt 201 Messsignale eines an der Bremse angeordneten Verschleißsensors ausgelesen, beispielsweise mittels des Controllers 10.

In Schritt 203 wird ein Ausgangssignalwert ermittelt, vorzugsweise von dem Prozessor 11 des Controllers 10, wobei der Ausgangssignalwert repräsentativ für den unbetätigten Zustand der Bremse ist. Die Ermittlung erfolgt aus den Messsignalen, die zuvor in Schritt 201 ausgelesen wurden. Vorzugsweise werden mehrere Messsignale in Schritt 203 zu Mittelwerten zusammengefasst.

In Schritt 205 wird geprüft, vorzugsweise mittels des Controllers 10, ob das aktuell ausgelesene Messsignal den in Schritt 203 ermittelten Ausgangssignalwert um einen vorbestimmten Triggerwert überschreitet. Ist dies nicht der Fall, wird das Ermitteln des Ausgangssignalwertes und das Auslesen der Messsignale ausgesetzt.

Hat das aktuell ausgelesene Messsignal den ermittelten Ausgangssignalwert um den vorbestimmten Triggerwert überschritten, wird in Schritt 207, vorzugsweise mittels des Controllers 10, der Ereignissignalwert ermittelt, der repräsentativ für den Bremszustand der Bremse ist.

Vorzugsweise umfasst der Schritt des Ermittelns des Ereignissignalwerts das Bilden einer Funktion des Signalverlaufs über die Zeit in Schritt 209, das Bilden einer ersten zeitlichen Ableitung des Messsignals in Schritt 211, und das Bilden einer zweiten zeitlichen Ableitung des Messsignals in Schritt 213, wobei die Schritte sequenziell erfolgen können.

Auf Basis dieser Ermittlung wird anschließend in Schritt 215, vorzugsweise mittels des Controllers 10, überprüft, ob eine charakteristische Schwingung, die durch eine zeitliche Abfolge von einem lokalen Signalmaximum und einem lokalen Signalminimum gebildet wird. Solange noch kein Wertepaar aus der ersten und zweiten zeitlichen Abbildung des Messsignals aus den Schritten 211, 213 identifiziert wurde, bei dem die erste zeitliche Ableitung des Messsignals gleich null ist, und die zweite zeitliche Ableitung des Messsignals größer null ist, wird die in Schritt 207 vorgenommene Bildung der Ableitungen fortgesetzt. Sobald die vorstehend genannten Kriterien erfüllt sind, wird ausgehend von Schritt 215 in Schritt 217 ein Lüftspiel aus der Differenz zwischen dem festgestellten Ereignissignalwert und dem Ausgangssignalwert ermittelt, vorzugsweise mittels des Controllers 10. Optional wird ausgehend von Schritt 217 sodann in Schritt 219 ein Grenzwert für das maximal zulässige Lüftspiel bereitgestellt. In Schritt 221 wird der bereitgestellte Grenzwert mit dem ermittelten Lüftspiel verglichen. Falls das Lüftspiel den Grenzwert überschreitet, wird in Schritt 223 ein Warnsignal bereitgestellt.

Optional wird unmittelbar nach dem Bereitstellen des Warnsignals, oder bereits nach dem Ermitteln des Lüftspiels in Schritt 217 das Verfahren fortgesetzt, indem in Schritt 225 ein Sollwert für das Lüftspiel der Bremse bereitgestellt wird, vorzugsweise mittels des Controllers 10.

In Schritt 227 wird das ermittelte Lüftspiel mit dem Sollwert verglichen, und es wird ein Korrekturwert als Differenz zwischen dem ermittelten Lüftspiel und dem Sollwert ermittelt, vorzugsweise mittels des Controllers 10.

In Schritt 229 wird überprüft, ob der zuvor ermittelte Korrekturwert eine vorbestimmte Schwelle überschreitet und/oder ob der ermittelte Konturwert innerhalb eines vorbestimmten Toleranzbandes ein- oder mehrmals in sukzessiven Messungen bestätigt werden kann. Ist dies nicht der Fall, wird mit der Ermittlung des Korrekturwerts fortgefahren in Schritt 227. Ist aber der Korrekturwert bestätigt worden oder hat eine bestimmte Schwelle überschritten, wird in Schritt 231 das Bereitstellen des Korrekturwerts, vorzugsweise mittels der Datenschnittstelle 15 an die, vorzugsweise elektrische, Nachstelleinheit 300 der Bremse oder das Bus-System 400 des Kraftfahrzeugs durchgeführt.

In Schritt 233 wird das Lüftspiel der Bremse um den zuvor bereitgestellten Korrekturwert nachgestellt, beispielsweise von der Nachstelleinheit 300.

Wenngleich der Controller 10 im vorliegenden Ausführungsausbeispiel als Bestandteil der Fahrzeugbremse 100 erläutert worden ist, soll dennoch verstanden werden, dass der Controller 10 auch als alleinstehende funktionale Einheit das Wesen der Erfindung verkörpert.

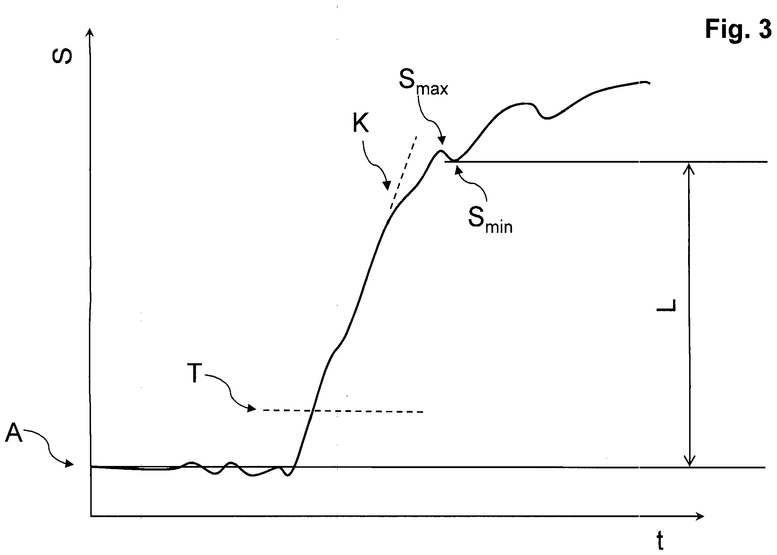

In Fig. 3 ist exemplarisch der zeitliche Signalverlauf der vom Verschleißsensor 115 ausgegebenen Signale S dargestellt. Die Zeitachse t kann beispielsweise Millisekunden oder Sekunden als Einheit aufweisen. Die Signalachse S kann beispielsweise unmittelbar die Messsignaleinheit (beispielsweise [mV] oder [mA]) oder den bereits umgerechneten, dem Messsignal entsprechenden Sensorweg anzeigen, dessen Einheit beispielsweise [mm] sein könnte. Relevant ist der qualitative Verlauf, auf den im Folgenden der Fokus gerichtet wird.

Bei zunächst unbetätigter Bremse pendelt der Signalwert S auf einem Messsignalplateau um einen Ausgangssignalwert A herum, der durch kontinuierliche Messung, und optional Mittelwertbildung, bestimmt wird. Bei Betätigen der Bremse wirft der Verschleißsensor 115 über die Zeit t ansteigende Signalwerte S aus. Ab dem Überschreiten einer Triggerschwelle T wird vorzugsweise die Ermittlung des Ereignissignalwerts gestartet. Der Signalverlauf S(t) wird hinsichtlich seines Steigungs- und Krümmungsverhaltens von dem Controller 10 untersucht. Im Signalverlauf S(t) ist ein erster Kontakt zwischen Bremsbelag und seinem Gegenpart mit K gekennzeichnet. Hier kommt es zu einem abgeschwächten Signalverlauf S(t), allerdings noch nicht zur charakteristischen Schwingung. Die charakteristische Schwingung ereignet sich zeitlich kurz darauffolgend bei vollständig anliegendem Bremsbelag am Gegenpart. Die charakteristische Schwingung wird gebildet durch ein lokales Signalmaximum Sₘₐₓ, gefolgt von einem lokalen Signalminimum Sₘᵢₙ. Beim Signalminimum Sₘᵢₙ ist die Steigung der Signalkurve gleich null, und die Krümmung ist positiv. Dieser Zustand kann eindeutig aus dem Signalverlauf ermittelt werden. Dieser Wert wird als Endpunkt des Leerhubs festgelegt. Die Differenz zwischen dem Ausgangssignalwert A und dem als Ereignissignalwert festgesetzten lokalen Minimum Sₘᵢₙ ergibt das vom Controller 10 erkannte Lüftspiel L. In dem Graphen gemäß Figur 3 ist zu erkennen, dass das lokale Signalminimum Sₘᵢₙ ein etwas größeres Lüftspiel ergibt, als theoretisch im Punkt K vorliegen würde. In der Praxis wird das wie vorstehend beschrieben ermittelte Lüftspiel L allerdings nur um wenige Zehntelmillimeter maximal vom theoretischen Lüftspiel abweichen, so dass die Wahl des Signalminimums Sₘᵢₙ einen vorteilhaften Kompromiss darstellt, der mit höherer Wiederholgenauigkeit im Signalverlauf S(t) ermittelbar ist, als es ein Punkt K wäre.

### Bezugszeichenliste

- 10: Controller
- 11: Prozessor
- 13: Datenspeicher
- 15: Datenschnittstelle
- 100: Bremse
- 101: Niederhaltefeder
- 103: Bremsbelag
- 105: Bremsscheibe
- 107: Bremssattel
- 109: Niederhaltebügel
- 111: Bremsenträger
- 113: signalleitende Verbindung
- 115: Verschleißsensor
- 200: Verfahren
- 201 - 233: Verfahrensschritte
- 300: Nachstelleinheit
- 400: Bus-System
- A: Ausgangssignalwert
- K: Punkt für theoretisches Lüftspiel
- L: Lüftspiel
- S: Signalwert
- Sₘₐₓ: Signalmaximum
- Sₘᵢₙ: Signalminimum, Ereignissignalwert
- t: Zeit
- T: Triggerschwelle

## Patentansprüche

1. Verfahren (200) zur Lüftspielerkennung bei einer Bremse (100) eines Kraftfahrzeugs, insbesondere eines Nutzkraftfahrzeugs,
umfassend die Schritte:
- Auslesen von Messsignalen eines an der Bremse (100) angeordneten Verschleißsensors (115), .
- Ermitteln eines Ausgangssignalwertes, der repräsentativ für den unbetätigten Zustand der Bremse ist, aus den Messsignalen,
- Ermitteln eines Ereignissignalwertes, der repräsentativ für den Bremszustand der Bremse ist, aus den Messsignalen, und
- Ermitteln des Lüftspiels aus der Differenz zwischen dem Ereignissignalwert und dem Ausgangssignalwert, wobei
- die Messsignale des Verschleißsensors auf das Vorliegen einer charakteristischen Signalschwingung untersucht werden, die infolge des Inkontaktbringens des Bremsbelags mit seinem zu bremsenden Gegenpart entsteht.

2. Verfahren (200) nach Anspruch 1,
wobei die charakteristische Schwingung durch ein lokales Signalmaximum und ein zeitlich dazu benachbartes lokales Signalminimum gebildet wird, und als Ereignissignalwert der Signalwert des Signalminimums gesetzt wird.

3. Verfahren (200) nach Anspruch 1 oder 2,
wobei der Ausgangssignalwert ermittelt wird, indem die ausgelesenen Messsignale über einen vorbestimmten Zeitraum gemittelt werden und der Mittelwert zwischengespeichert wird.

4. Verfahren (200) nach einem der vorstehenden Ansprüche,
wobei der Schritt des Ermittelns des Ereignissignalwertes durchgeführt wird, sobald das ausgelesene Messsignal den Ausgangssignalwert um einen vorbestimmten Triggerwert überschreitet.

5. Verfahren (200) nach einem der vorstehenden Ansprüche,
wobei das Ermitteln des Ereignissignalwerts umfasst:
- Erfassen der Messsignale als Funktion der Zeit,
- Bilden einer ersten zeitlichen Ableitung des Messsignals, und
- Bilden einer zweiten zeitlichen Ableitung des Messsignals.

6. Verfahren (200) nach Anspruch 5,
wobei das Signalminimum als derjenige Signalwert bestimmt wird, bei dem
- die erste zeitliche Ableitung des Messsignals gleich null ist, und
- die zweite zeitliche Ableitung des Messsignals größer null ist.

7. Verfahren (200) nach einem der vorstehenden Ansprüche,
wobei der Schritt des Ermittelns des Ausgangssignalwertes erneut erfolgt, sobald eine Bremsung des Kraftfahrzeugs beendet ist, insbesondere sobald der ausgelesene Messsignalwert den Triggerwert unterschreitet.

8. Verfahren (200) nach einem der vorstehenden Ansprüche,
weiter umfassend:
- Bereitstellen eines Grenzwertes für das maximal zulässige Lüftspiel der Bremse,
- Vergleichen des ermittelten Lüftspiels mit dem Grenzwert, und
- Bereitstellen eines Warnsignals, falls das Lüftspiel den Grenzwert überschreitet.

9. Verfahren zum automatischen Nachstellen des Lüftspiels einer Bremse (100) eines Kraftfahrzeugs, insbesondere eines Nutzkraftfahrzeugs, umfassend:
- ein Verfahren nach einem der vorstehenden Ansprüche, und weiter umfassend:
- Bereitstellen eines Sollwertes für das Lüftspiel der Bremse,
- Vergleichen des ermittelten Lüftspiels mit dem Sollwert, und
- Ermitteln eines Korrekturwertes als Differenz zwischen dem ermittelten Lüftspiels und dem Sollwert.

10. Verfahren (200) nach Anspruch 9, weiter umfassend:
- Bereitstellen des Korrekturwertes mittels einer Datenschnittstelle (15) an eine , vorzugsweise elektrische, Nachstelleinheit (300) der Bremse, und
- Nachstellen des Lüftspiels der Bremse um den bereitgestellten Korrekturwert.

11. Verfahren nach einem der vorstehenden Ansprüche 9 oder 10, wobei die Messsignale Spannungs- oder Stromsignale sind, wobei vorzugsweise der Verschleißsensor (115) einen Weg- oder Winkelmessaufnehmer aufweist, und weiter vorzugsweise sich die Messsignale linear proportional zu der erfassten Weg- bzw. Winkelstrecke verhalten.

12. Controller (10) zur Lüftspielerkennung bei einer Bremse (100) eines Kraftfahrzeugs, insbesondere eines Nutzkraftfahrzeugs, mit
- einem Prozessor (11),
- einem Datenspeicher (13), und
- einer Datenschnittstelle (15),
wobei in dem Datenspeicher (15) ein Computerprogramm zur Durchführung des Verfahrens nach einem der vorstehenden Ansprüche hinterlegt ist, wobei der Prozessor dazu eingerichtet ist, einen, mehrere oder sämtliche der Verfahrensschritte des Verfahrens auszuführen.

13. Controller (10) nach Anspruch 12,
wobei der Controller dazu eingerichtet ist, zumindest eines der Folgenden an der Datenschnittstelle (15) bereitzustellen:
- für das erkannte Lüftspiel der Bremse repräsentative Signalwerte,
- ein Warnsignal bei Überschreiten eines vorbestimmten Grenzwertes des Lüftspiels, oder
- ermittelte Korrekturwerte zur Nachstellung des Lüftspiels.

14. Controller (10) nach Anspruch 12 oder 13,
wobei die Datenschnittstelle (15) zur direkten Kommunikation mit einer Nachstelleinheit (300) eingerichtet ist, und/oder zur Kommunikation mit einem BUS-System (400) des Kraftfahrzeugs.

15. Fahrzeugbremse (100), insbesondere Nutzkraftfahrzeugbremse, mit
- einem Verschleißsensor (115), und
einem Controller (10) zur Lüftspielerkennung der Bremse (100), wobei der Verschleißsensor signalleitend mit dem Controller verbunden ist und der Controller nach einem der Ansprüche 12 bis 14 ausgebildet ist.

## Claims

1. Method (200) for detecting the clearance of a brake (100) of a motor vehicle, in particular of a utility vehicle,
comprising the steps:
- reading out measurement signals of a wear sensor (115) which is arranged on the brake (100),
- determining from the measurement signals an output signal value which is representative of the unactivated state of the brake,
- determining from the measurement signals an event signal value which is representative of the braking state of the brake and
- determining the clearance from the difference between the event signal value and the output signal value, wherein
- the measurement signals of the wear sensor are examined for the presence of a characteristic signal oscillation which arises owing to the brake lining being brought into contact with its opposing part which is to be braked.

2. Method (200) according to Claim 1,
wherein the characteristic oscillation is formed by a local signal maximum and a local signal minimum which is chronologically adjacent thereto, and the signal value of the signal minimum is set as an event signal value.

3. Method (200) according to Claim 1 or 2,
wherein the output signal value is determined by averaging the read-out measurement signals over a predetermined time period and buffering the mean value.

4. Method (200) according to one of the preceding claims,
wherein the step of determining the event signal value is carried out as soon as the read-out measurement signal exceeds the output signal value by a predetermined trigger value.

5. Method (200) according to one of the preceding claims,
wherein determining the event signal value comprises
- recording the measurement signals as a function of time,
- forming a first time derivative of the measurement signal,
- forming a second time derivative of the measurement signal.

6. Method (200) according to Claim 5, wherein the signal minimum is determined as that signal value at which
- the first time derivative of the measurement signal is equal to zero, and
- the second time derivative of the measurement signal is greater than zero.

7. Method (200) according to one of the preceding claims,
wherein the step of determining the output signal value is carried out again as soon as braking of the motor vehicle is ended, in particular as soon as the read-out measurement signal value undershoots the trigger value.

8. Method (200) according to one of the preceding claims, further comprising:
- making available a limiting value for the maximum permissible clearance of the brake,
- comparing the determined clearance with the limiting value, and
- making available a warning signal if the clearance exceeds the limiting value.

9. Method for automatically adjusting the clearance of a brake (100) of a motor vehicle, in particular of a utility vehicle, comprising:
- a method according to one of the preceding claims and further comprising:
- making available a setpoint value for the clearance of the brake,
- comparing the determined clearance with the setpoint value, and
- determining a correction value as the difference between the determined clearance and the setpoint value.

10. Method (200) according to Claim 9, further comprising:
- making available the correction value to a, preferably electric, adjustment unit (300) of the brake by means of a data interface (15), and
- adjusting the clearance of the brake by the correction value which is made available.

11. Method according to either of the preceding Claims 9 and 10, wherein the measurement signals are voltage signals or current signals, wherein the wear sensor (115) preferably comprises a travel measuring pickup or angle measuring pickup, and more preferably the measurement signals behave in a linearly proportional fashion with respect to the sensed travel distance or angular distance.

12. Controller (10) for detecting the clearance of a brake (100) of a motor vehicle, in particular of a utility vehicle, having
- a processor (11),
- a data memory (13), and
- a data interface (15),
wherein a computer program for carrying out the method according to one of the preceding claims is stored in the data memory (15), wherein the processor is configured to carry out one or more or all of the method steps of the method.

13. Controller (10) according to Claim 12, wherein the controller is configured to make available at least one of the following to the data interface (15):
- signal values which are representative of the detected clearance of the brake,
- a warning signal when a predetermined limiting value of the clearance is exceeded, or
- determined correction values for adjusting the clearance.

14. Controller (10) according to Claim 12 or 13 wherein the data interface (15) is configured to communicate directly with an adjustment unit (300) and/or to communicate with a BUS system (400) of the motor vehicle.

15. Vehicle brake (100), in particular utility vehicle brake, having
- a wear sensor (115) and a controller (10) for detecting the clearance of the brake (100), wherein the wear sensor is connected in a signal-conducting manner to the controller, and the controller is embodied according to one of Claims 12 to 14.

## Revendications

1. Procédé (200) d'identification de jeu pour un frein (100) d'un véhicule à moteur, notamment d'un véhicule utilitaire, comprenant les étapes suivantes :
- lecture des signaux de mesure d'un détecteur d'usure (115) disposé au niveau du frein (100) ;
- détermination d'une valeur de signal de départ correspondant à l'état non actionné du frein, à partir des signaux de mesure ;
- détermination d'une valeur de signal d'événement correspondant à l'état de freinage du frein, à partir des signaux de mesure ; et
- détermination du jeu à partir de la différence entre la valeur de signal d'événement et la valeur de signal de départ ;
les signaux de mesure du détecteur d'usure étant analysés pour rechercher une oscillation de signal caractéristique se produisant lors de la mise en contact de la garniture de frein avec sa contrepartie à faire freiner.

2. Procédé (200) selon la revendication 1, dans lequel l'oscillation caractéristique est composée d'un maximum de signal local et d'un minimum de signal local proche dans le temps et est définie comme la valeur de signal d'événement de la valeur de signal du minimum de signal.

3. Procédé (200) selon la revendication 1 ou 2, dans lequel la valeur de signal de départ est déterminée en réalisant une moyenne des signaux de mesure lus pendant une période de temps prédéfinie et en mémorisant en mémoire tampon la valeur moyenne.

4. Procédé (200) selon l'une quelconque des revendications précédentes, dans lequel l'étape de détermination de la valeur de signal d'événement est réalisée dès que le signal de mesure lu dépasse la valeur de signal de départ d'une valeur de seuil prédéfinie.

5. Procédé (200) selon l'une quelconque des revendications précédentes, dans lequel la détermination de la valeur de signal d'événement comprend :
- la détection des signaux de mesure en fonction du temps ;
- la formation d'une première dérivée dans le temps du signal de mesure ; et
- la formation d'une deuxième dérivée dans le temps du signal de mesure.

6. Procédé (200) selon la revendication 5, dans lequel le minimum de signal est défini comme la valeur de signal dans laquelle :
- la première dérivée dans le temps du signal de mesure est également à zéro ; et
- la deuxième dérivée dans le temps du signal de mesure est supérieure à zéro.

7. Procédé (200) selon l'une quelconque des revendications précédentes, l'étape de détermination de la valeur de signal de départ étant de nouveau réalisée dès la fin d'un freinage du véhicule à moteur, notamment dès que la valeur de signal de mesure lue passe en dessous de la valeur de seuil.

8. Procédé (200) selon l'une quelconque des revendications précédentes, comprenant en outre :
- la mise à disposition d'une valeur limite pour le jeu maximal admis du frein ;
- la comparaison du jeu déterminé avec la valeur limite ; et
- la mise à disposition d'un signal d'avertissement si le jeu dépasse la valeur limite.

9. Procédé d'ajustement automatique du jeu d'un frein (100) d'un véhicule à moteur, notamment d'un véhicule utilitaire, comprenant :
- un procédé selon l'une quelconque des revendications précédentes et comprenant en outre :
- la mise à disposition d'une valeur théorique pour le jeu du frein ;
- la comparaison du jeu déterminé avec la valeur théorique ; et
- la détermination d'une valeur de correction servant de différence entre le jeu déterminé et la valeur théorique.

10. Procédé (200) selon la revendication 9, comprenant en outre :
- la mise à disposition d'une unité d'ajustement (300), de préférence électrique, du frein de la valeur de correction à l'aide d'une interface de données (15) ; et
- l'ajustement du jeu du frein de la valeur de correction mise à disposition.

11. Procédé selon l'une quelconque des revendications 9 ou 10, dans lequel les signaux de mesure sont des signaux de tension ou de courant, le détecteur d'usure (115) comportant de préférence un capteur de mesure de course ou d'angle et les signaux de mesure se comportant de façon davantage préférée de façon linéaire proportionnellement à la section de course et/ou d'angle.

12. Contrôleur (10) d'identification de jeu pour un frein (100) d'un véhicule à moteur, notamment d'un véhicule utilitaire, avec :
- un processeur (11) ;
- une mémoire de données (13) ; et
- une interface de données (15) ;
un programme informatique étant mémorisé dans la mémoire de données (15) pour la mise en œuvre du procédé selon l'une quelconque des revendications précédentes, le processeur étant conçu pour exécuter une, plusieurs ou l'ensemble des étapes de procédé du procédé.

13. Contrôleur (10) selon la revendication 12, dans lequel le contrôleur est conçu pour mettre à disposition de l'interface de données (15) au moins un des éléments suivants :
- des valeurs de signal représentatives du jeu détecté du frein ;
- un signal d'avertissement en cas de dépassement d'une valeur limite prédéfinie du jeu ; ou
- des valeurs de correction déterminées pour l'ajustement du jeu.

14. Contrôleur (10) selon la revendication 12 ou 13, dans lequel l'interface de données (15) est conçue pour communiquer directement avec une unité d'ajustement (300) et/ou pour communiquer avec un système BUS (400) du véhicule à moteur.

15. Frein de véhicule (100), notamment frein de véhicule utilitaire, avec :
- un détecteur d'usure (115) ; et
- un contrôleur (10) d'identification de jeu du frein (100), le détecteur d'usure étant relié au contrôleur par transmission de signal et le contrôleur étant réalisé selon l'une quelconque des revendications 12 à 14.
